# FASCICULE DE BREVET EUROPEEN

(11) **EP 1 351 850 B1**
(45) Date de publication et mention de la délivrance du brevet: **27.06.2007**
(21) Numéro de dépôt: 01270446.6
(22) Date de dépôt: 10.12.2001
(51) Int. Cl.: B60T 13/57, B60T 13/573

(54) **DISPOSITIF DE FREINAGE ASSISTE A VALVE D'URGENCE AVEC SAUT ELEVE**
BREMSKRAFTVERSTÄRKER MIT EINEN HOHEN SCHWELLWERT AUFWEISENDEM SICHERHEITSVENTIL
BRAKE BOOSTER WITH HIGH KICK-OFF EMERGENCY VALVE

(30) Priorité: 14.12.2000 FR 0016459
(43) Date de publication de la demande: 15.10.2003
(73) Titulaire: ROBERT BOSCH GMBH, 70442 Stuttgart (DE)
(72) Inventeur: VERBO, Ulysse, F-93600 AULNAY-SOUS-BOIS (FR); ATTARD, Jean-Marc, F-60500 CHANTILLY (FR); AUGUSTE, Antony, F-94350 VILLIERS SUR MARNE (FR)
(74) Mandataire: Hurwic, Aleksander Wiktor
(86) Numéro de dépôt international: PCT/FR2001/003912
(87) Numéro de publication internationale: WO 2002/047952

(56) Documents cités:
- US-A- 5 921 084
- US-A- 6 076 351

## Description

L'invention est relative à un dispositif de freinage assisté, pour véhicule à moteur, du type de ceux qui comprennent un maître-cylindre commandant la pression dans au moins un circuit de freinage, un piston primaire monté coulissant dans le maître-cylindre pour y créer une variation de pression, ce piston primaire étant soumis à une force d'actionnement se composant d'une force d'entrée exercée par un organe de commande manuelle et d'une force d'assistance exercée par un servomoteur d'assistance qui est couplé à l'organe de commande manuelle.

Le servomoteur d'assistance peut être pneumatique et comprendre une enveloppe rigide séparée en deux chambres pneumatiques par une cloison mobile qui peut être soumise à une différence de pression entre les chambres sous l'action d'une valve actionnée par l'organe de commande manuelle, cette cloison mobile entraînant un piston pneumatique.

Un dispositif de freinage de ce type est connu, par exemple d'après FR-B-2 658 466 ou d'après EP-B-0 662 894. Des dispositifs de freinage comportant en outre une réaction hydraulique avec une assistance accrue lors de freinage d'urgence (brake assist en terminologie anglo-saxonne) sont décrits dans US-A-5 921 084 et US-A-6 076 351.

Les conditions dans lesquelles le freinage est exercé peuvent différer. Un premier cas correspond à des conditions ordinaires lorsqu'un obstacle est vu de loin et que le freinage est exercé relativement doucement ; ce freinage est appelé "freinage normal" ou "freinage lent". Un autre cas est celui d'un freinage brusque ou "freinage d'urgence", par exemple lorsqu'un obstacle surgit brutalement devant le conducteur qui doit arrêter son véhicule le plus vite possible.

En vue de satisfaire à ces différentes conditions de freinage, un dispositif de freinage assisté, du type défini précédemment, a été complété par une valve d'assistance d'urgence propre à faire intervenir au moins deux rapports d'assistance correspondant respectivement à un freinage lent et à un freinage d'urgence ; le rapport d'assistance pour le freinage lent est plus faible et la réaction hydraulique opposée à l'avance de l'organe de commande manuelle est plus forte. Pour le freinage d'urgence, le rapport d'assistance est plus fort et la réaction hydraulique à l'encontre de l'organe de commande manuelle est plus faible, de sorte que le conducteur peut freiner plus longtemps et plus fort.

Par convention, dans la suite du texte, on désignera par le terme "avant" un sens orienté depuis l'organe de commande vers le maître-cylindre et par le terme "arrière" le sens opposé.

La valve d'assistance d'urgence comporte : un piston de réaction soumis à l'action d'un moyen élastique de rappel vers une position de repos, ce piston de réaction coulissant de manière étanche dans un alésage du piston primaire, la partie avant de cet alésage communiquant avec le volume intérieur du maître-cylindre; un piston rapide de section inférieure à celle du piston de réaction coulissant de manière étanche dans un autre alésage de diamètre correspondant; et une commande de rapport actionnée par un distributeur plongeur lui-même entraîné par l'organe de commande manuelle, l'ensemble étant agencé pour que, lors d'un freinage d'urgence, une réaction hydraulique ne s'exerce que sur la section du piston rapide.

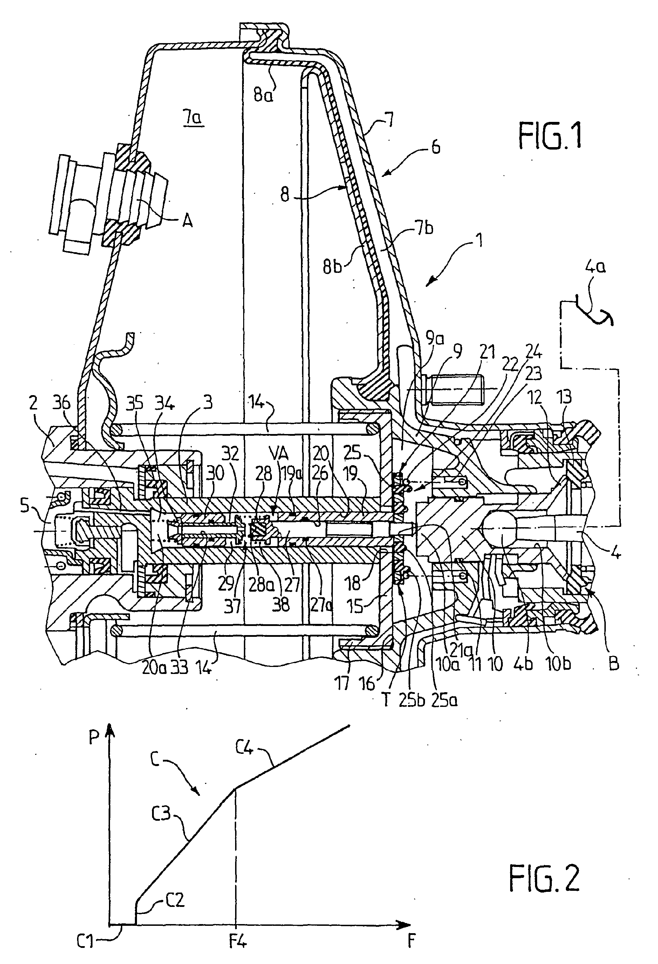

Un tel dispositif de freinage avec valve d'assistance d'urgence donne satisfaction tant au point de vue du fonctionnement que de l'effort de freinage. Toutefois, les réalisations proposées jusqu'à ce jour sont relativement coûteuses et imposent une limite relativement basse à la valeur du saut, dont la définition est rappelée plus loin avec référence à Fig.2. En outre, ces réalisations ne permettent pas une standardisation du concept pour différentes versions du maître-cylindre, notamment dans le cas de rapports d'assistance pouvant varier de 3 à 6.6 avec des maîtres-cylindres dont le diamètre peut varier de 19.6 mm à 24.5 mm.

Un premier but de l'invention est de développer une solution économique de la valve d'assistance d'urgence permettant une augmentation de la valeur du saut tout en réduisant sa dispersion.

L'invention a également pour but de proposer une solution qui permette une standardisation pour des versions de maîtres-cylindres de diamètres sensiblement différents.

Selon l'invention, un dispositif de freinage assisté, pour véhicule à moteur, du type défini précédemment comportant une valve d'assistance d'urgence est caractérisé par le fait que le moyen de rappel élastique du piston de réaction est disposé à l'extérieur du piston primaire, et qu'un élément de transmission est prévu pour transmettre la force de rappel du moyen élastique au piston de réaction.

Le moyen de rappel élastique du piston de réaction, qui crée le saut, peut ainsi avoir des dimensions plus élevées que s'il était logé dans le piston primaire, ce qui permet une augmentation de la valeur du saut.

Le moyen de rappel élastique est généralement constitué par un ressort de compression. Ce ressort, appelé ressort de saut, est avantageusement disposé dans le servomoteur. Le piston pneumatique peut comporter une concavité tournée vers l'avant, et le ressort de saut est disposé dans cette concavité, en particulier autour du distributeur plongeur.

Un renfort de piston pneumatique est prévu et constitué par un disque avec une ouverture centrale pour le passage du piston de réaction, ce disque étant lié au piston pneumatique et déterminant avec ce dernier une chambre dans laquelle est placé le ressort de saut. Le disque est en appui, vers l'avant, contre le piston primaire.

Le disque est maintenu, dans le piston pneumatique, en appui vers l' arrière contre un épaulement du piston pneumatique. Selon une première possibilité, le disque comporte à sa périphérie une jupe cylindrique en saillie vers l'avant, filetée extérieurement et vissée dans dans un filetage conjugué prévu sur la surface intérieure d'une partie cylindrique du piston pneumatique. Selon une autre possibilité, le disque ne comporte pas de jupe filetée et son maintien est assuré , à l'avant, par un jonc élastique fendu ancré dans une gorge du piston pneumatique.

L'élément de transmission peut comprendre une plaque , de préférence circulaire, cette plaque comportant une ouverture centrale pour le passage de la commande de rapport, et étant en appui, d'un côté , contre le piston de réaction et, de l'autre côté, contre le moyen de rappel élastique.

La plaque est disposée mobile dans le piston pneumatique, en arrière du renfort de piston. Avantageusement la plaque comporte , au moins sur sa face tournée vers le distributeur plongeur, un moyen amortisseur de réaction pour amortir l'entrée en contact de la plaque avec le distributeur plongeur. Ce moyen amortisseur peut être constitué d'une masse de matière élastomère adhérisée à la plaque et présentant au moins un bourrelet faisant saillie vers l'arrière en direction du distributeur plongeur ; de préférence un autre bourrelet fait saillie vers l'avant.

Un moyen de guidage de la plaque peut être prévu pour guider cette plaque relativement au distributeur plongeur. Ce moyen de guidage peut comprendre un manchon central cylindrique, solidaire de la plaque, en saillie vers le distributeur plongeur, ce manchon étant reçu de manière coulissante dans un alésage borgne du distributeur plongeur, ouvert vers l'avant. Le manchon comporte un passage central pour la commande de rapport et pour un poussoir prévu sur le distributeur plongeur.

L'invention concerne également un servomoteur d'assistance pneumatique, pour dispositif de freinage assisté à valve d'urgence, le servomoteur comprenant une enveloppe rigide séparée en deux chambres pneumatiques par une cloison mobile qui peut être soumise à une différence de pression entre les chambres sous l'action d'une valve actionnée par l'organe de commande manuelle, cette cloison mobile entraînant un piston pneumatique , caractérisé par le fait qu'un ressort de saut pour valve d'urgence est logé dans le servomoteur et qu'un élément de transmission de l'effort du ressort de saut est également prévu dans le servomoteur.

Le piston pneumatique peut présenter une concavité tournée vers l'avant, tandis qu' un renfort de piston, lié au piston pneumatique est disposé à l'avant de cette concavité , le ressort de saut étant disposé entre le fond de la concavité et une plaque qui peut se déplacer dans le piston pneumatique et est arrêtée vers l'avant par le renfort de piston.

L'invention consiste, mises à part les dispositions exposées ci-dessus, en un certain nombre d'autres dispositions dont il sera plus explicitement question ci-après à propos d'exemples de réalisation décrits en détail avec référence aux dessins ci-annexés, mais qui ne sont nullement limitatifs. Sur ces dessins :
Fig. 1 est une vue partielle en coupe, avec parties arrachées, d'un dispositif de freinage selon l'invention en position de repos ;
Fig.2 est une représentation graphique de la variation de la pression hydraulique P dans le maître-cylindre, portée en ordonnée, en fonction de l'effort F exercé sur l'organe de commande manuelle ;
Fig.3 est une vue partielle en coupe, à plus grande échelle, d'éléments de Fig.1 et de la valve d'assistance d'urgence, en position de repos ;
Fig.4 montre, semblablement à Fig.3, les positions des éléments lors d'un freinage lent à l'équilibre ;
Fig.5 est une vue partielle en coupe d'une variante de réalisation ;
Fig.6 enfin montre en coupe, à plus grande échelle, le détail VI de Fig.5.

La structure d'ensemble et le fonctionnement général d'un dispositif de freinage assisté du type de l'invention sont connus, notamment d'après les brevets EP-B- 0 662 894 ou FR-B-2 658 466 et ne seront que succinctement rappelés. Pour plus de détails, on pourra se reporter aux deux brevets cités, incorporés à la description par référence.

Sur Fig.1, on peut voir un dispositif de freinage 1 pour véhicule automobile qui comprend un maître-cylindre 2 partiellement représenté et un piston primaire 3 monté coulissant dans le maître-cylindre 2. Un organe de commande manuelle 4 comprenant une tringle coaxiale au piston primaire 3 est prévu pour exercer sur ce piston une force d'entrée de l'arrière vers l'avant, c'est-à-dire de la droite vers la gauche selon la représentation de Fig.1. Le déplacement du piston primaire 3 vers l'avant crée une augmentation de pression du liquide dans le volume intérieur 5 du maître-cylindre, relié à au moins un circuit hydraulique de freinage. L'organe de commande 4 est généralement actionné par une pédale de frein 4a schématiquement représentée.

Un servomoteur d'assistance pneumatique 6 est couplé à l'organe de commande 4. Le servomoteur 6 comprend une enveloppe rigide 7 séparée intérieurement de manière étanche en deux chambres pneumatiques 7a, 7b par une cloison mobile 8 comprenant une membrane 8a en matière élastomère et une jupe rigide 8b. La chambre 7a est reliée en permanence à une source de dépression (non représentée) par un ajutage A. Un piston pneumatique 9 en forme de manchon coaxial au piston primaire 3 est fixé à la jupe rigide 8b. Le piston pneumatique 9 est monté coulissant, de manière étanche, sur un distributeur plongeur 10, de forme globalement cylindrique. L'étanchéité est assurée par un joint torique 11.

Le distributeur plongeur 10 comporte vers l'avant une tête 10a et, vers l'arrière, un logement borgne axial 10b, ouvert vers l'arrière, qui reçoit une rotule 4b prévue à l'extrémité de la tringle 4. Le distributeur plongeur 10 comporte, du côté opposé au piston 3, un épanouissement tronconique 12 qui peut venir en appui de manière étanche contre une bague 13 en matière élastomère liée en translation axiale au piston pneumatique 9. L'ensemble 12, 13 constitue une partie d'une valve trois voies B (partiellement représentée) qui permet soit d'isoler la chambre 7b de l'atmosphère et de mettre en communication les chambres 7a, 7b, soit d'isoler les chambres 7a, 7b l'une de l'autre et d'admettre de l'air à pression atmosphérique dans la chambre 7b lorsque l'épanouissement 12 s'écarte axialement de la bague 13.

Le piston pneumatique 9 est rappelé vers sa position de repos, représentée sur Fig.1, par un ressort de compression 14 disposé entre le piston 9 et la paroi opposée de l'enveloppe 7 sur laquelle est fixé le maître-cylindre 2. Le piston pneumatique 9 a sensiblement la forme d'une cloche, couchée à l'horizontale, coaxiale au piston 3, avec sa concavité 9a tournée vers l'avant. Le piston 9 peut être réalisé en matière plastique rigide.

Un renfort de piston constitué par un disque 15 , par exemple métallique , est disposé à l'avant de la concavité 9a , perpendiculairement à l'axe géométrique du piston 9. Le disque 15 est lié au piston 9 et est maintenu en appui axial vers l'arrière, au voisinage de sa périphérie, contre un épaulement 16 du piston pneumatique 9. Dans l'exemple de réalisation des Figs.1, 3 et 4, le disque 15 comporte une jupe périphérique cylindrique 17 tournée vers l'avant, filetée extérieurement et vissée dans un filetage interne conjugué d'une partie cylindrique du piston pneumatique 9. Le renfort de piston 15 comporte une ouverture centrale 18 et peut venir en appui vers l'avant contre le piston primaire 3 au voisinage du contour de l'ouverture 18. Le renfort 15 constitue la paroi avant d'une chambre fermée correspondant à la concavité 9a.

Une valve d'assistance d'urgence VA est prévue pour faire intervenir au moins deux rapports d'assistance correspondant respectivement à un freinage normal (lent) et à un freinage d'urgence.

La valve VA comprend un piston de réaction 19 dont la surface extérieure est cylindrique, de diamètre constant. Le piston de réaction 19 coulisse de manière étanche grâce à un joint torique 19a dans un alésage axial 20 du piston primaire 3. L'extrémité arrière du piston de réaction 19 peut traverser l'ouverture 18, dont le diamètre est supérieur à celui du piston 19, pour venir en appui axial contre un élément T de transmission de force constitué par une plaque 21 métallique, de préférence circulaire, située dans la concavité 9a du piston 9 du côté du renfort de piston 15 opposé au piston 3. La plaque 21 comporte une ouverture centrale 2 1 a , et peut être déplacée axialement dans le piston 9.

Un ressort hélicoïdal de compression 22, appelé ressort de saut, est prévu à l'extérieur du piston primaire 3.

Le ressort 22 est avantageusement disposé dans la concavité 9a du piston pneumatique 9, autour du distributeur plongeur 10, du côté du renfort 15 opposé au piston primaire 3 . Le ressort 22 est en appui axial, vers l'avant, contre la plaque 21 et, vers l'arrière, contre le piston pneumatique 9 qui comporte une gorge annulaire 23 dans laquelle est partiellement logé le ressort 22. La plaque 21, soumise à la poussée du ressort 22, est retenue vers l'avant par le renfort 15 lié au piston 9.

Le ressort de saut 22 peut avoir un diamètre important, supérieur au diamètre extérieur du piston primaire 3.

La plaque 21 est munie d'un moyen amortisseur de réaction 24 formé par une masse 25 de matière élastomère logée dans des ouvertures de la plaque 21 et adhérisée à celle-ci. La masse élastomère 25 présente deux bourrelets annulaires 25a, 25b en saillie vers l'arrière , et un bourrelet annulaire 25c en saillie vers l'avant . Le bourrelet 25a permet d'amortir l'entrée en contact de la plaque 21 avec le distributeur plongeur 10. Le bourrelet 25b , plus éloigné radialement de l'axe géométrique du distributeur plongeur 10, permet d'amortir l'entrée en contact avec le fond du piston pneumatique 9. Le diamètre extérieur du bourrelet 25b correspond avantageusement au diamètre intérieur des spires du ressort 22 afin de centrer la plaque 21 dans ce ressort.

Le bourrelet 25c, situé de l'autre côté de la plaque 21, permet d'amortir l'entrée en contact avec le renfort de piston 15.

Le piston de réaction 19 comporte un alésage axial 26 dans lequel une commande de rapport 27, formée par une tige, est montée coulissante de manière étanche grâce à un joint torique 27a. L'extrémité arrière de la commande de rapport 27 traverse l'ouverture 21 a de la plaque 21 pour venir en appui contre la tête 10a du distributeur plongeur 10. L'extrémité avant de la commande de rapport 27 comporte une tête 28 située dans une chambre 29 de l'alésage 20 comprise entre le piston de réaction 19 et une douille 30 logée plus en avant dans l'alésage 20.

La douille 30 est bloquée axialement dans l'alésage 20, par exemple par emmanchement à force. Cette douille 30 comporte un alésage axial 31 qui la traverse complètement et dans lequel un piston rapide 32 est monté coulissant de manière étanche grâce à un joint torique. Le diamètre extérieur du piston rapide 32 est plus petit que celui du piston de réaction 19. Le piston rapide 32 est traversé axialement par un passage 33 qui débouche à chaque extrémité. L'extrémité avant du piston rapide 32 est en appui contre un coulisseau 34 poussé élastiquement par un ressort de maintien 35 contre la douille 30. Le ressort 35 prend appui, de l'autre côté, contre le fond de l'alésage 20.

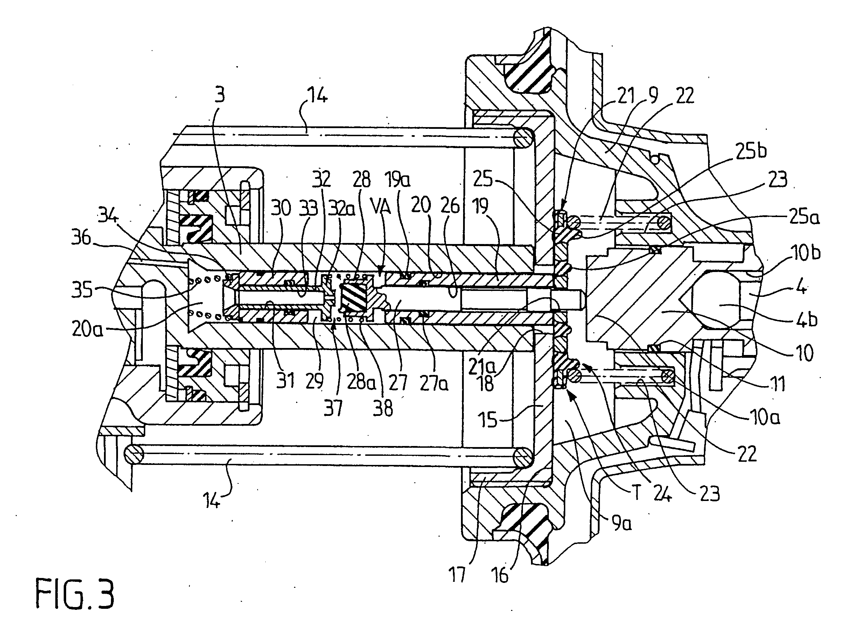

La zone avant 20a de l'alésage 20 dans laquelle est logé le ressort 35 communique par un canal 36 avec le volume intérieur 5 du maître cylindre 2. L'extrémité arrière 32a (Fig.3) du piston rapide 32 est située dans la chambre 29, au voisinage de la tête 28 de la commande de rapport. Cette extrémité arrière 32a forme, avec la tête 28, un clapet 37 qui comprend, par exemple, une portée annulaire sur la face d'extrémité 32a et un bouchon en matière élastomère 28a, fixé dans la tête 28, et qui fait saillie pour s'appliquer de matière étanche contre la face 32a . Un ressort 38 de compression est disposé entre deux épaulements prévus respectivement sur le piston 32 et sur la tête 28 pour agir dans le sens de l'ouverture du clapet. Au repos, le clapet 37 est ouvert.

Ceci étant, le fonctionnement du dispositif de freinage assisté selon l'invention est le suivant. On considère le cas d'un freinage lent.

Dans la position de repos des Figs.1 et 3, le ressort de saut 22 pousse la plaque 21 contre le renfort 15 de piston pneumatique. Le piston de réaction 19 est en appui par son extrémité arrière contre la plaque 21. La commande de rapport 27 est en appui contre la tête 10a du distributeur plongeur 10.

L'organe de commande manuelle 4 est déplacé, relativement lentement, vers l'avant. La valve B est actionnée et coupe la communication entre les chambres 7a et 7b, puis l'épanouissement tronconique 12 s'écarte de la bague élastique 13 ce qui assure l'admission d'air à pression atmosphérique dans la chambre 7b du servomoteur 6.

Sur la courbe C de Fig.2, cette phase de déplacement de l'organe 4 pour l'ouverture de la valve B correspond au segment C1 d'ordonnée nulle, car la force assurant le déplacement de l'organe 4 ne provoque pas d' augmentation de la pression P dans le maître-cylindre 2.

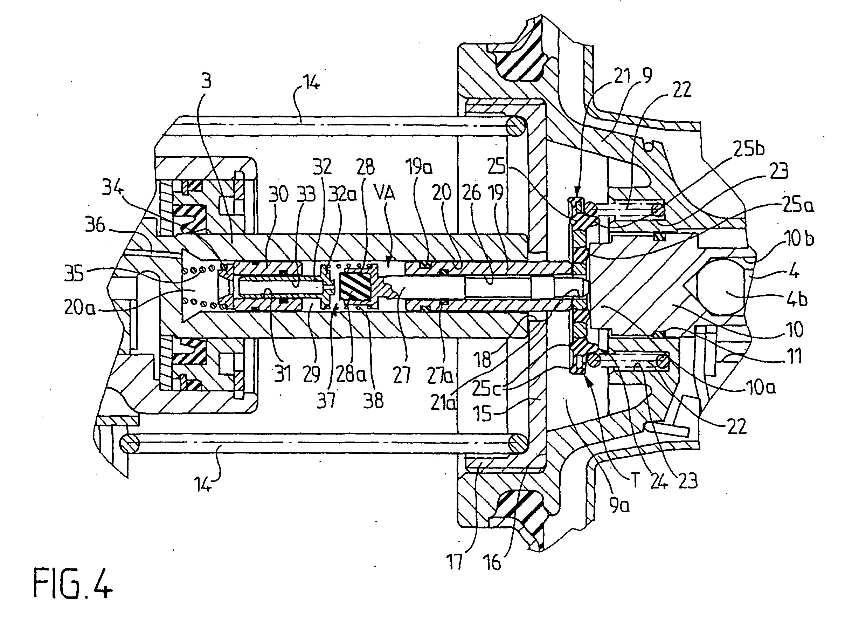

Après ouverture de la valve B, la pression dans la chambre 7b augmente et la cloison mobile 8 transmet la force d'assistance au piston pneumatique 9 qui se déplace vers l'avant à l'encontre du ressort 14. Le piston 9 entraîne le renfort 15 qui pousse le piston primaire 3 vers l'avant. La pression du liquide augmente dans le volume 5 ainsi que dans la chambre 29 qui communique avec ce volume car le clapet 37 est ouvert. La pression engendre sur le piston de réaction 19 un effort vers l'arrière. Lorsque cet effort atteint et dépasse la précontrainte du ressort 22, le piston de réaction 19 recule en poussant la plaque 21 jusqu'à venir en butée contre la tête 10a comme illustré sur Fig.4. Le bourrelet 25a permet d'amortir le choc et d'éviter le bruit.

Cette phase est appelée saut et est représentée par un segment vertical C2 sur Fig.2 . Il y a augmentation de pression dans le maître-cylindre 5 sans accroissement de la force exercée sur l'organe 4.

Fig.4 représente la configuration lors d'un freinage lent, à l'équilibre, c'est-à-dire alors que la valve B est fermée, et que l'organe 4 est arrêté dans la position représentée sur Fig.4.

Si le conducteur poursuit son effort afin que la force d'entrée sur l'organe 4 continue à croître, le distributeur plongeur 10 poursuit son déplacement vers l'avant ; le piston pneumatique 9 suit le distributeur plongeur 10 et pousse le piston primaire 3 avec la force d'assistance. La pression du liquide dans le volume 5 continue à augmenter selon le segment C3 de Fig.2.

Lorsque le servomoteur d'assistance 6 produit son effort maximal, la saturation est atteinte et correspond à l'extrémité supérieure du segment C3 , d'abscisse F4.

Au-delà de la saturation, l'organe de commande 4 continue à avancer sous l'action de la force d'entrée manuelle. La commande de rapport 27 avance relativement au piston primaire 3 et la tête 28 s'applique contre l'extrémité 32a de sorte que le clapet 37 se ferme.

La plaque 21 poussée par le distributeur plongeur 10 vient en appui contre le renfort 15 de piston et le bourrelet 21c permet d'amortir le choc. La force d'entrée manuelle exercée sur l'organe 4 est alors transmise par le renfort 15 au piston primaire 3, ce qui provoque l'augmentation de la pression dans le maître cylindre 2 selon le segment C4 sur Fig.2, avec une pente moins forte que celle du segment C3.

Dans le cas d'un freinage rapide, le distributeur plongeur 10 se déplace au début plus rapidement que le piston 9 de sorte que la commande de rapport 27 avance relativement au piston primaire 3 ; en conséquence, le clapet 37 se ferme . La tête 10a du distributeur plongeur vient en appui contre le bourrelet 25a de la plaque 21, elle-même en appui contre le renfort de piston 15 qui pousse le piston primaire 3. Le clapet 37 étant fermé, la réaction hydraulique ne s'exerce que sur la petite section du piston rapide 32.

Selon l'invention, le ressort de saut 22 situé à l'extérieur du piston primaire 3 peut avoir de grandes dimensions, notamment un grand diamètre. Il est ainsi possible de lui donner une forte précontrainte qui permet d'obtenir une hauteur importante du segment C2 (Fig.2), par exemple de l'ordre de 15 à 20 bars. On obtient ainsi un saut plus élevé . Il en résulte davantage de mordant au freinage, avec une attaque plus nette des patins de frein.

En outre, la longueur du ressort 22 peut être ajustée de manière précise, ce qui permet de réduire la dispersion du saut. En effet, la disposition du ressort 22 à l'extérieur du piston 3, dans le servomoteur 6, permet de diminuer une accumulation de cotes de fabrication intervenant dans la détermination des paramètres de fonctionnement. Les cotes de réglage de la valve d'urgence VA n'interviennent plus sur la longueur du ressort utilisé.

Avec le ressort 22 disposé dans le piston 9 du servomoteur 6, un seul système, fermé par le renfort 15, est assemblé en usine ; le réglage du dispositif de freinage est effectué par la suite sans toucher au sous-ensemble comportant le ressort 22 de saut.

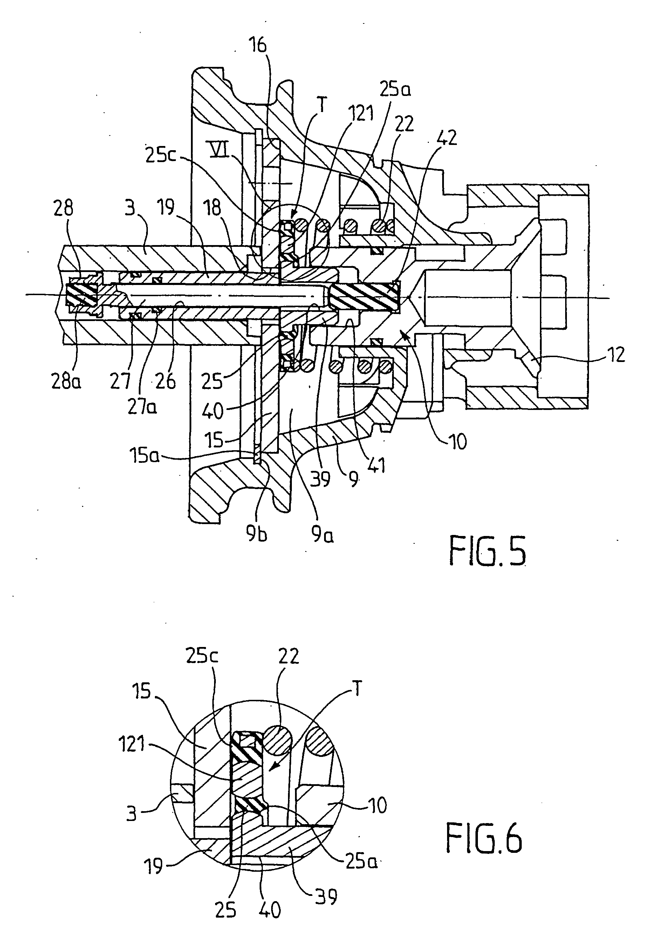

En se reportant aux Figs. 5 et 6, on peut voir une variante de réalisation dans laquelle un guidage amélioré de l'élément de transmission T est prévu. Les éléments identiques ou jouant des rôles équivalents à des éléments déjà décrits à propos des figures précédentes sont désignés par les mêmes références numériques, éventuellement précédées du chiffre 1 des centaines, sans que leur description soit reprise.

La plaque d'appui 121, formant l'élément de transmission, est solidaire d'un manchon 39 coaxial dirigé vers l'arrière. Un alésage 40, de diamètre supérieur à l'alésage 26 du piston de réaction 19, traverse coaxialement de part en part le manchon 39 . La partie arrière de la commande de rapport 27 est engagée dans l'alésage 40.

Le distributeur plongeur 10 comporte, à son extrémité avant, un alésage borgne 41, dont le diamètre intérieur est égal au diamètre extérieur du manchon 39, au jeu de coulissement près. Le manchon 39 est engagé dans cet alésage 41. Un poussoir cylindrique 42 est engagé dans un logement coaxial du distributeur plongeur 10 prévu dans le fond de l'alésage borgne 41. Le poussoir 42 fait saillie dans l' alésage 41 et peut s'engager dans l'alésage 40 du manchon 39 pour venir en butée contre l'extrémité arrière de la commande de rapport 27.

Le renfort de piston 15 est constitué par un disque plan qui ne comporte pas, à la différence des Figs. 1 et 3, de jupe cylindrique filetée extérieurement. Le maintien du renfort 15 , dans le piston 9, en appui contre l'épaulement 16 est assuré par un jonc élastique fendu 15a, ancré dans une gorge annulaire 9b du piston 9, en butée contre la face avant du renfort 15.

Le fonctionnement de la variante de Fig.5 est semblable à celui décrit précédemment. Les avantages énoncés sont conservés et, en outre, le guidage du coulissement de la plaque 121 est amélioré par la coopération du manchon 39 et de l'alésage borgne 41.

L'invention permet de balayer les divers rapports d'assistance en particulier de 3.5 à 6.6, quel que soit le diamètre du maître-cylindre 2 (qui peut notamment varier de 19 mm à 25,4 mm) et la valeur de saut souhaitée (qui peut être de 20 bars pour un diamètre de maître-cylindre 2 inférieur à 23.8 mm, et de 15 bars pour un diamètre de maître-cylindre 2 égal à 25.4 mm) sans modification majeure de conception.

L'amortissement est identique pour toutes les solutions envisagées et n'est effectué que par une seule pièce 21,121. La dimension de la pièce permet d'augmenter les parties d'amortissement et donc de réduire sensiblement le bruit.

La forme du piston de réaction 19 est simplifiée, et le guidage de ce piston 19 est amélioré.

L'augmentation de l'emplacement réservé au ressort de saut 22 permet de réduire la tolérance de la valeur du saut, en réduisant la raideur du ressort.

## Revendications

1. Dispositif de freinage assisté, pour véhicule à moteur, comprenant un maître-cylindre (2) commandant la pression dans au moins un circuit de freinage, un piston primaire (3) monté coulissant dans le maître-cylindre pour y créer une variation de pression, ce piston primaire étant soumis à une force d'actionnement se composant d'une force d'entrée exercée par un organe de commande manuelle (4) et d'une force d'assistance exercée par un servomoteur d'assistance (6) qui est couplé à l'organe de commande manuelle (4), et une valve d'assistance d'urgence (VA) qui comporte : un piston de réaction (19) soumis à l'action d'un moyen élastique de rappel (22) vers une position de repos, le piston de réaction (19) coulissant de manière étanche dans un alésage (20) du piston primaire, la partie avant (20a) de cet alésage communiquant avec le volume intérieur (5) du maître-cylindre ; un piston rapide (32) de section inférieure à celle du piston de réaction (19) coulissant de manière étanche dans un autre alésage (33) de diamètre correspondant ; et une commande de rapport (27) actionnée par un distributeur plongeur (10) lui-même entraîné par l'organe de commande manuelle (4),
l'ensemble étant agencé pour que, lors d'un freinage d'urgence, une réaction hydraulique ne s'exerce que sur la section du piston rapide (32),
**caractérisé par le fait que** le moyen de rappel élastique (22) du piston de réaction (19) est disposé à l'extérieur du piston primaire (3), et qu'un élément de transmission (T) est prévu pour transmettre la force de rappel du moyen élastique (22) au piston de réaction (19).

2. Dispositif de freinage selon la revendication 1, **caractérisé par le fait que** le moyen de rappel élastique (22) du piston de réaction est disposé dans le servomoteur (6).

3. Dispositif de freinage selon la revendication 1 ou 2, **caractérisé par le fait que** le servomoteur d'assistance (6) comprend un piston pneumatique (9) qui comporte une concavité (9a) tournée vers l'avant, et que le moyen de rappel élastique est constitué par un ressort de compression (22), ou ressort de saut, disposé dans cette concavité (9a).

4. Dispositif de freinage selon la revendication 3, **caractérisé par le fait qu'** il comporte un renfort de piston pneumatique constitué par un disque (15) avec une ouverture centrale (18) pour le passage du piston de réaction (19), ce disque étant lié au piston pneumatique (9) et déterminant avec ce dernier une chambre dans laquelle est placé le ressort de saut (22), le disque (15) étant en appui, vers l'avant, contre le piston primaire (3).

5. Dispositif de freinage selon la revendication 4, **caractérisé par le fait que** le disque (15) est maintenu, dans le piston pneumatique (9), en appui vers l'arrière contre un épaulement (16) du piston pneumatique.

6. Dispositif de freinage selon la revendication 5, **caractérisé par le fait que** le disque (15) comporte à sa périphérie une jupe cylindrique (17) en saillie vers l'avant, filetée extérieurement et vissée dans dans un filetage conjugué prévu sur la surface intérieure d'une partie cylindrique du piston pneumatique (9).

7. Dispositif de freinage selon la revendication 5, **caractérisé par le fait que** le disque (15) est maintenu , à l'avant, par un jonc élastique fendu (15a) ancré dans une gorge (9b) du piston pneumatique (9).

8. Dispositif de freinage selon l'une des revendications précédentes, **caractérisé par le fait que** l'élément de transmission (T) comprend une plaque (21,121) comportant une ouverture centrale (21a, 40) pour le passage de la commande de rapport (27), cette plaque étant en appui, d'un côté, contre le piston de réaction (19) et, de l'autre côté, contre le moyen de rappel élastique (22).

9. Dispositif de freinage selon l'ensemble des revendications 4 et 8, **caractérisé par le fait que** la plaque (21,121) est disposée mobile dans le piston pneumatique (9), en arrière du renfort de piston (15).

10. Dispositif de freinage selon la revendication 8 ou 9, **caractérisé par le fait que** la plaque (21,121) comporte, au moins sur sa face tournée vers le distributeur plongeur (10), un moyen amortisseur de réaction (24) pour amortir l'entrée en contact de la plaque avec le distributeur plongeur (10).

11. Dispositif de freinage selon la revendication 10, **caractérisé par le fait que** le moyen amortisseur (24) est constitué d'une masse de matière élastomère (25) adhérisée à la plaque (21,121) et présentant au moins un bourrelet (25a, 25b) faisant saillie vers l'arrière en direction du distributeur plongeur (10).

12. Dispositif de freinage selon la revendication 11, **caractérisé par le fait que** la masse de matière élastomère (25) comprend un autre bourrelet (25c) faisant saillie vers l'avant.

13. Dispositif de freinage selon l'une des revendications 8 à 12, **caractérisé par le fait qu'**un moyen de guidage (39,41) de la plaque (121) est prévu pour la guider relativement au distributeur plongeur (10).

14. Dispositif de freinage selon la revendication 13, **caractérisé par le fait que** le moyen de guidage comprend un manchon central cylindrique (39), solidaire de la plaque (121), en saillie vers le distributeur plongeur (10), ce manchon (39) étant reçu de manière coulissante dans un alésage borgne (41) du distributeur plongeur, ouvert vers l'avant.

15. Dispositif de freinage selon la revendication 14, **caractérisé par le fait que** le manchon (39) comporte un passage central (40) pour la commande de rapport (27) et pour un poussoir (42) prévu sur le distributeur plongeur.

16. Dispositif de freinage assisté à valve d'urgence selon l'une quelconque des revendications précédentes comportant un servomoteur d'assistance pneumatique, comprenant une enveloppe rigide (6) séparée en deux chambres pneumatiques (7a,7b) par une cloison mobile (8) qui peut être soumise à une différence de pression entre les chambres sous l'action d'une valve (B) actionnée par l'organe de commande manuelle (4), cette cloison mobile (8) entraînant un piston pneumatique (9), **caractérisé par le fait qu'**un ressort de saut (22) pour valve d'urgence est logé dans le servomoteur et qu'un élément de transmission (T) de l'effort du ressort de saut est également prévu dans le servomoteur (6).

17. Dispositif selon la revendication 16, **caractérisé par le fait que** le piston pneumatique (9) dudit servomoteur présente une concavité (9a) tournée vers l'avant, qu'un renfort de piston (15), lié au piston pneumatique, est disposé à l'avant de cette concavité et que le ressort de saut (22) est disposé dans la concavité (9a) entre le fond de la concavité et une plaque (21,121), pouvant se déplacer dans le piston pneumatique et arrêtée vers l'avant par le renfort de piston (15).

18. Dispositif selon la revendication 17, **caractérisé par le fait que** le renfort de piston (15) dudit servomoteur comporte une ouverture centrale (18) pour le passage du piston de réaction (19) d'une valve d'urgence, tandis que la plaque (21, 121) comporte une ouverture centrale (21a, 40) pour le passage de la commande de rapport de la valve d'urgence.

## Claims

1. Boosted braking device for a motor vehicle, comprising a master cylinder (2) controlling the pressure in at least one brake circuit, a primary piston (3) slidably mounted in the master cylinder to create therein a variation in pressure, this primary piston being subjected to an actuating force made of an input force exerted by a manual operating member (4) and of a boost force exerted by a booster (6) coupled to the manual operating member (4), and an emergency assist valve (VA) which comprises: a reaction piston (19) subjected to the action of an elastic return means (22) returning it to a position of rest, the reaction piston (19) sliding in a sealed manner in a bore (20) of the primary piston, the front part (20a) of this bore communicating with the interior volume (5) of the master cylinder; a rapid piston (32) of a cross section smaller than that of the reaction piston (19) sliding in a sealed manner in another bore (33) of corresponding diameter; and a ratio control (27) actuated by a plunger distributor (10) itself driven by the manual operating member (4),
the assembly being arranged so that, under emergency braking, a hydraulic reaction is exerted only on the cross section of the rapid piston (32),
**characterized in that** the elastic return means (22) for returning the reaction piston (19) is arranged outside the primary piston (3), and **in that** a transmission element (T) is provided to transmit the return force of the elastic means (22) to the reaction piston (19).

2. Braking device according to Claim 1, **characterized in that** the elastic return means (22) for returning the reaction piston is arranged inside the booster (6).

3. Braking device according to Claim 1 or 2, **characterized in that** the booster (6) comprises a pneumatic piston (9) which comprises a cavity (9a) facing forwards, and **in that** the elastic return means consists of a compression spring (22), or jump spring, arranged in this cavity (9a).

4. Braking device according to Claim 3, **characterized in that** it comprises a pneumatic piston reinforcement consisting of a disc (15) with a central opening (18) for the passage of the reaction piston (19), this disc being connected to the pneumatic piston (9) and determining therewith a chamber in which the jump spring (22) is placed, the disc (15) bearing, forwards, against the primary piston (3).

5. Braking device according to Claim 4, **characterized in that** the disc (15) is held, in the pneumatic piston (9), bearing backwards against a shoulder (16) of the pneumatic piston.

6. Braking device according to Claim 5, **characterized in that** the disc (15) comprises, at its periphery, a forward-projecting cylindrical skirt (17), externally threaded and screwed into into [sic] a mating screwthread provided on the interior surface of a cylindrical part of the pneumatic piston (9).

7. Braking device according to Claim 5, **characterized in that** the disc (15) is held, at the front, by a split elastic ring (15a) anchored in a groove (9b) of the pneumatic piston (9).

8. Braking device according to one of the preceding claims, **characterized in that** the transmission element (T) comprises a plate (21, 121) comprising a central opening (21a, 40) for the passage of the ratio control (27), this plate bearing, on one side, against the reaction piston (19) and, on the other side, against the elastic return means (22).

9. Braking device according to the collection of Claims 4 and 8, **characterized in that** the plate (21, 121) is arranged so that it can move in the pneumatic piston (9), to the rear of the piston reinforcement (15).

10. Braking device according to Claim 8 or 9, **characterized in that** the plate (21, 121) comprises, at least on its face facing towards the plunger distributor (10), a reaction deadening means (24) for deadening the contact between the plate and the plunger distributor (10).

11. Braking device according to Claim 10, **characterized in that** the deadening means (24) consists of a mass of elastomeric material (25) bonded to the plate (21, 121) and having at least one bulge (25a, 25b) projecting backwards towards the plunger distributor (10).

12. Braking device according to Claim 11, **characterized in that** the mass of elastomeric material (25) comprises another bulge (25c) projecting forwards.

13. Braking device according to one of Claims 8 to 12, **characterized in that** a guide means (39, 41) for guiding the plate (121) is provided, for guiding it relative to the plunger distributor (10).

14. Braking device according to Claim 13, **characterized in that** the guide means comprises a central cylindrical sleeve (39) secured to the plate (121), projecting towards the plunger distributor (10), this sleeve (39) being slidingly received in a blind bore (41) of the plunger distributor, open to the front.

15. Braking device according to Claim 14, **characterized in that** the sleeve (39) comprises a central passage (40) for the ratio control (27) and for a push-rod (42) provided on the plunger distributor.

16. Boosted braking device with an emergency valve according to any one of the preceding claims, comprising a pneumatic booster, comprising a rigid casing (6) divided into two pneumatic chambers (7a, 7b) by a moving partition (8) which can be subjected to a difference in pressure between the chambers under the action of a valve (B) actuated by the manual operating member (4), this moving partition (8) driving a pneumatic piston (9), **characterized in that** a jump spring (22) for an emergency valve is housed in the booster and **in that** a transmission element (T) for transmitting the force of the jump spring is also provided in the booster (6).

17. Braking device according to Claim 16, **characterized in that** the pneumatic piston (9) of the said booster has a cavity (9a) facing forwards, **in that** a piston reinforcement (15) connected to the pneumatic piston is arranged at the front of this cavity and **in that** the jump spring (22) is arranged in the cavity (9a) between the bottom of the cavity and a plate (21, 121) which can move in the pneumatic piston and which is stopped at the front via the piston reinforcement (15).

18. Braking device according to Claim 17, **characterized in that** the piston reinforcement (15) of the said booster comprises a central opening (18) for the passage of the reaction piston (19) of an emergency valve, while the plate (21, 121) comprises a central opening (21a, 40) for the passage of the ratio control of the emergency valve.

## Patentansprüche

1. Vorrichtung für eine unterstützte Bremsung für ein Kraftfahrzeug, mit einem Hauptzylinder (2), der den Druck in mindestens einem Bremskreis steuert, einem Primärkolben (3), der im Hauptzylinder gleitend angebracht ist, um dort eine Druckänderung zu erzeugen, wobei dieser Primärkolben einer Betätigungskraft ausgesetzt ist, die sich aus einer Eingangskraft, die von einem Organ (4) zur manuellen Steuerung ausgeübt wird, und einer Unterstützungskraft zusammensetzt, die von einem an das Organ (4) zur manuellen Steuerung gekoppelten Unterstützungsservomotor (6) ausgeübt wird, und mit einem Unterstützungs-Notventil (VA), das einen Reaktionskolben (19) aufweist, der der Wirkung eines elastischen Mittels (22) zum Zurückstellen in eine Ruhestellung ausgesetzt ist, wobei der Reaktionskolben (19) in dichter Weise in einer Bohrung (20) des Primärkolbens gleitet, wobei der vordere Abschnitt (20a) dieser Bohrung mit dem Innenvolumen (5) des Hauptzylinders verbunden ist, einen schnellen Kolben (32), dessen Querschnitt kleiner ist als der des Reaktionskolbens (19) und der in dichter Weise in einer weiteren Bohrung (33) mit entsprechendem Durchmesser gleitet, und eine Verhältnissteuerung (27), die von einem Tauchkolbenverteiler (10) angetrieben wird, der selbst von dem Organ (4) zur manuellen Steuerung angetrieben wird,
wobei die Baugruppe so angeordnet ist, dass bei einer Notbremsung eine hydraulische Reaktion lediglich auf den Querschnitt des schnellen Kolbens (32) ausgeübt wird,
**dadurch gekennzeichnet, dass** das elastische Mittel (22) zum Zurückstellen des Reaktionskolbens (19) im Primärkolben (3) angeordnet ist und ein Übertragungselement (T) zur Übertragung der Rückstellkraft des elastischen Mittels (22) zum Reaktionskolben (19) vorgesehen ist.

2. Bremsvorrichtung nach Anspruch 1, **dadurch gekennzeichnet, dass** das elastische Mittel (22) zum Zurückstellen des Reaktionskolbens im Servomotor (6) angeordnet ist.

3. Bremsvorrichtung nach Anspruch 1 oder 2, **dadurch gekennzeichnet, dass** der Unterstützungsservomotor (6) einen pneumatischen Kolben (9) mit einer nach vorne gerichteten Aushöhlung (9a) aufweist und das elastische Rückstellmittel durch eine in dieser Aushöhlung (9a) angeordnete Druckfeder (22) oder Sprungfeder gebildet ist.

4. Bremsvorrichtung nach Anspruch 3, **dadurch gekennzeichnet, dass** sie eine Verstärkung für einen pneumatischen Kolben aufweist, die aus einer Scheibe (15) mit einer mittleren Öffnung (18) für das Durchführen des Reaktionskolbens (19) besteht, wobei diese Scheibe mit dem pneumatischen Kolben (9) verbunden ist und mit diesem eine Kammer begrenzt, in der die Sprungfeder (22) angeordnet ist, wobei die Scheibe (15) nach vorne hin am Primärkolben (3) anliegt.

5. Bremsvorrichtung nach Anspruch 4, **dadurch gekennzeichnet, dass** die Scheibe (15) im pneumatischen Kolben (9) so gehalten ist, dass sie nach hinten an einer Schulter (16) des pneumatischen Kolbens anliegt.

6. Bremsvorrichtung nach Anspruch 5, **dadurch gekennzeichnet, dass** die Scheibe (15) an ihrem Umfang eine zylindrische Schürze (17) aufweist, die nach vorne hervorsteht, mit einem Außengewinde versehen ist und in ein zugeordnetes Gewinde geschraubt ist, das an der Innenfläche eines zylindrischen Abschnitts des pneumatischen Kolbens (9) vorgesehen ist.

7. Bremsvorrichtung nach Anspruch 5, **dadurch gekennzeichnet, dass** die Scheibe (15) vorne durch einen geschlitzten elastischen Ring (15a) gehalten ist, der in einer Nut (9b) des pneumatischen Kolbens (9) verankert ist.

8. Bremsvorrichtung nach einem der vorhergehenden Ansprüche, **dadurch gekennzeichnet, dass** das Übertragungselement (T) eine Platte (21, 121) mit einer mittleren Öffnung (21 a, 40) für das Durchführen der Verhältnissteuerung (27) aufweist, wobei diese Platte auf einer Seite am Reaktionskolben (19) und auf der anderen Seite am elastischen Rückstellmittel (22) anliegt.

9. Bremsvorrichtung nach den Ansprüchen 4 und 8, **dadurch gekennzeichnet, dass** die Platte (21, 121) beweglich im pneumatischen Kolben (9) und hinter der Kolbenverstärkung (15) angeordnet ist.

10. Bremsvorrichtung nach Anspruch 8 oder 9, **dadurch gekennzeichnet, dass** die Platte (21, 121) zumindest an ihrer dem Tauchkolbenverteiler (10) zugewandeten Fläche ein Reaktionsdämpfungsmittel (24) aufweist, um eine Dämpfung auszuführen, wenn die Platte mit dem Tauchkolbenverteiler (10) in Berührung gelangt.

11. Bremsvorrichtung nach Anspruch 10, **dadurch gekennzeichnet, dass** das Dämpfungsmittel (24) aus einer Masse (25) aus Elastomermaterial besteht, die an der Platte (21, 121) angehaftet ist und mindestens eine Wulst (25a, 25b) aufweist, die nach hinten zum Tauchkolbenverteiler (10) hin hervorsteht.

12. Bremsvorrichtung nach Anspruch 11, **dadurch gekennzeichnet, dass** die Masse (25) aus Elastomermaterial eine weitere Wulst (25c) aufweist, die nach vorne hervorsteht.

13. Bremsvorrichtung nach einem der Ansprüche 8 bis 12, **dadurch gekennzeichnet, dass** ein Mittel (39, 41) zur Führung der Platte (121) vorgesehen ist, um diese bezüglich des Tauchkolbenverteilers (10) zu führen.

14. Bremsvorrichtung nach Anspruch 13, **dadurch gekennzeichnet, dass** das Führungsmittel eine mittlere zylindrische Muffe (39) aufweist, die fest mit der Platte (121) verbunden ist und zum Tauchkolbenverteiler (10) hervorsteht, wobei diese Muffe (39) in einer nach vorne offenen Blindbohrung (41) des Tauchkolbenverteilers gleitend aufgenommen ist.

15. Bremsvorrichtung nach Anspruch 14, **dadurch gekennzeichnet, dass** die Muffe (39) einen mittleren Durchgang (40) für die Verhältnissteuerung (27) und einen am Tauchkolbenverteiler vorgesehenen Stößel (42) aufweist.

16. Vorrichtung für eine unterstützte Bremsung mit einem Notventil nach einem der vorhergehenden Ansprüche, die einen pneumatischen Unterstützungsservomotor aufweist, mit einem starren Gehäuse (6), das in zwei pneumatische Kammern (7a, 7b) unterteilt ist durch eine bewegliche Trennwand (8), die unter der Wirkung eines von dem Organ (4) zur manuellen Steuerung betätigten Ventils (B) einer Druckdifferenz zwischen den Kammern ausgesetzt sein kann, wobei diese bewegliche Trennwand (8) einen pneumatischen Kolben (9) mitnimmt, **dadurch gekennzeichnet, dass** eine Sprungfeder (22) für ein Notventil im Servomotor angeordnet ist und ein Element (T) zur Übertragung der Sprungfederkraft auch im Servomotor (6) vorgesehen ist.

17. Vorrichtung nach Anspruch 16, **dadurch gekennzeichnet, dass** der pneumatische Kolben (9) des Servomotors eine nach vorne gerichtete Aushöhlung (9a) aufweist, dass eine mit dem pneumatischen Kolben verbundene Kolbenverstärkung (15) im vorderen Bereich dieser Aushöhlung angeordnet ist und dass die Sprungfeder (22) in der Aushöhlung (9a) zwischen dem Boden der Aushöhlung und einer Platte (21, 121) angeordnet ist, die sich im pneumatischen Kolben verlagern kann und nach vorne hin durch die Kolbenverstärkung (15) angehalten wird.

18. Vorrichtung nach Anspruch 17, **dadurch gekennzeichnet, dass** die Kolbenverstärkung (15) des Servomotors eine mittlere Öffnung (18) für das Durchführen des Reaktionskolbens (19) eines Notventils aufweist, während die Platte (21, 121) eine mittlere Öffnung (21 a, 40) für das Durchführen der Verhältnissteuerung des Notventils aufweist.
